# EUROPEAN PATENT APPLICATION

(11) **EP 1 909 220 A1**
(43) Date of publication of application: **09.04.2008**
(21) Application number: 07019607.6
(22) Date of filing: 08.10.2007
(51) Int. Cl.: G06N 5/00, G06F 17/28

(54) **Event-driven system for programming a mobile device**

(30) Priority: 06.10.2006 ES 200602544
(71) Applicant: Vodafone Group PLC, Newbury Berkshire RG14 2FN (GB); Vodafone Espana, S.A., 28108 Alcobendas, Madrid (ES)
(72) Inventor: Caudevilla Laliena, Guillermo, 22003 Huesca (ES); Guiterrez Isiegas, Oscar, 5002 Zaragoza (ES); Cristobal Cristobal, José Manuel, 28108 Alcobendas - Madrid (ES); Sanclemente Abos, Luis, 22003 Huesca (ES)
(74) Representative: Carvajal y Urquijo, Isabel

(57) **Abstract**

The invention relates to an event-driven system for programming a mobile device (100), comprising:
- a rule creator module (10), collecting indications from a user of the mobile device and generates at least one rule translating said indications into programming metadata;
- a rule repository (20), storing said rule formed by said programming metadata;
- a programmable information module (30), providing the rule creator module with the metadata establishing the programmable entities relating to the mobile device;
- a rule execution administrator module (40), controlling the activation and deactivation of said rule extracted from the rule repository, and passes said metadata of the rule as an execution parameter to a rule interpreter, which is sent to a rule execution engine module to execute or to detain and/or eliminate it; and
- said rule execution engine module (50), providing an execution environment in which the rule interpreter can be executed, converting said metadata into a process forming the rule.

## Description

### Field of the Invention

The present invention is included in the field of telecommunications networks and specifically the possibility of programming a mobile device.

### Background of the Invention

It is known that acronyms and abbreviations are frequently used in the field of mobile telephony. A glossary of acronyms and terms that are used throughout the present specification is set forth below:
- API: Application Programming Interface
- BPEL: Business Process Execution Language
- BPEL4WS: Business Process Execution Language for Web Services
- BPMN: Business Process Modeling Notation)
- Telco Event: an event generated by a mobile telephone or the network to which said device is connected.
- Process Description Language: a language which formalizes the description of a process.
- Metadata: a set of data which structures other data.
- Web Service: a standard XML-based method to access IP services. A Web Service is a set of protocols and standards that are used to create a homogeneous communication infrastructure for the purpose of exchanging data between applications.
- Device programming: management, combination or automation of typical applications or services of a mobile device according to user preferences and the data supplied by different sources.
- SMS: Short Message Service.
- WSDL: Web Service Description Language. WSDL is an XML-based language used to describe Web Services.
- XML: eXtensible Markup Language

Currently there are several possibilities for programming a mobile device: ranging from the most advanced and powerful, which require wide knowledge of the device operating system, such as programming languages, to much more limited, often virtually nonexistent, possibilities that the operating system provides to the ordinary user.

Different possibilities that currently exist in relation to mobile device programming will first be briefly described:

### • Programming with native languages:

The most powerful way of programming the behavior of a mobile device is by means of using native programming languages. A native programming language refers to the use of the same programming language on which the operating system is based. This agreement of technologies allows the programmer to access (if the manufacturer provides the APIs for it) at a very low level, the basic functionalities of the mobile device (such as telephony APIs for event capture). The programmer is thus able to construct advanced applications completely integrated into the mobile device, accessing the file system, invoking telephony functions of the mobile device or processing telco events captured while the user normally uses the mobile device.

This is where the good news stops. Unfortunately, mobile device operating systems are often owners (Motorola, Sharp), making low-level programming impossible, or they are based on very low level programming languages (Windows CE, Symbian) such as C and C++, making their programming an activity reserved for the world's experts in mobile device software and completely unreachable for the ordinary user. Furthermore, the migration of any application based on a native language to another platform automatically means that a large part of the code needs to be rewritten.

### • Programming on a virtual machine

Languages based on virtual machines appeared in response to native languages and essentially to the problems of deploying the same application in different platforms. Specifically, Java appeared.

Java provides an isolated and controlled execution environment for the operating system. It is thus assured that the programmer will not touch any vital part of the system. Furthermore, said environment is the same in all virtual machines, regardless of whether the program is on the Symbian or on the Windows CE virtual machine, such that any application programmed in Java can be run on any platform without needing to be rewritten. Therefore, the clichéd Java slogan, "write once, run everywhere", is true, at least in theory. Java further provides much more friendly programming environments and a much simpler syntax than C and C++ such that the Java developers community is wider.

However, not all that glitters is gold: Java cannot access the operating system, seriously limiting its functionality. In other words, today Java cannot capture telco events of the operating system, i.e. a telephone call or a received message pass inadvertently for the Java virtual machine. The different initiatives intending to provide Java with new functionalities are working on this and other Java problems; unfortunately the slowness of standardization organizations makes it so that different Java implementations that are not always compatible coexist in the market, questioning such "write once, run everywhere" slogan. Furthermore, despite that Java is a relatively friendly and easy to learn language, it continues to be out of the scope of the ordinary user who cannot, or who often does not want to learn to program.

### • Programming based on scripts

Script languages came about due to the necessity of automating and facilitating different tasks relating to the administration of computer systems

Script languages run on their respective interpreters. There is a different interpreter according to the platform on which the script has to be run. Therefore in this sense, they follow a model similar to Java, some of them however, like Python, are able to access the operating system although they do not allow capturing or using telco events of the mobile device. The same or similar can be said about the rest of the commercial script languages. Their basic characteristics define them as weakly typed and non-declarative programming languages, making them very powerful and easy to use tools for relatively simple tasks. Nevertheless, they continue to be out of the scope of the ordinary mobile device user.

### • Programming based on mobile device applications

Or what is the same: what possibilities does a mobile device give a user to program its behavior in response to certain events? The answer is none or almost none.

Different manufacturers have limited themselves to providing very limited means of personalizing the mobile device for the moment. Options such as the possibility of selecting a different ring tone for each phonebook contact, such as the possibility of assigning an image to each contact such that the image appears each time the sender calls or sends a message. This can all be done intuitively (and unrelated to the programming world) from the menus that the mobile device provides.

Another functionality that all mobile devices provide and that goes along with providing the user with an intuitive way of shaping the behavior of his or her mobile device is the possibility of defining alarms that notify the user at a given moment by means of resonant signals that the user can choose.

In addition, and as regards process description, there are several approaches that inevitably go hand in hand: XML-based process description languages and notations for the process description.

### • XML-based Process Description Languages

BPEL4WS is the most widespread XML-based process description language. It is a powerful tool which allows complex business processes to be described. Events, decisions, action sequences, messages between entities, transactions and roll backs... all business processes can be modeled with BPEL4WS, which uses an XML syntax very close to (or rather based on) SOAP services and WSDL files.

Even though the resulting files are legible, they cannot be handled by a human being, and much less by a normal user uneducated in XML, web service systems or distributed architectures on which it is based.

### • Notations for the process description

BPMN tries to alleviate the deficiencies, insofar as it is possible, in BPEL style languages by providing an intuitive notation based on simple graphics that any person with minimum help can decipher without problems. BPMN is used for describing large business systems at a very high level so that, insofar as it is possible, it is easy to understand the operation of the described system after just one look.

Over time, mobile devices have stopped being a specialized task element differentiated by their mobility feature. Today the amount of information that can be managed from a mobile device is large, in addition to being diverse: from stored data, typical functionalities of the device, events generates by the device and thanks to Internet generalization and the world of IP services, a mobile device is also capable of processing a multitude of data from these services.

Such amount of information can be combined to generate user-customized functionalities and services. However the use of this information and functionality today is reduced to specific closed services or applications provided by software solutions providers.

Currently there is no technical solution which solves the problem of modeling the features of a mobile device, combining the capabilities only accessible with native languages with other high level capabilities in a homogeneous set, and with meaning at the user level, of capturable events, checkable properties and invocable tasks, easily combined into rules triggered by events that can be described on different levels (for example graphically for the user, in XML form for the system) and automatically interpreted by the mobile device (for example by means of a script) to generate the native code which forms the process that implements the rule, thus allowing the user of a mobile device to program it without needing to be an expert programmer.

Thus for example, US patent 5,572,571 provides a method for automatically programming the network configuration of a mobile telephone; by means of this method, the necessary data for activating the mobile telephone is able to be transmitted without the user having to intervene. This invention relates only to the programming of a specific activity: the initial transmission of necessary data for the network configuration of the mobile phone.

European patent document EP-0827353 provides the programming of a mobile telephone by means of an intermediate artifact which translates the instructions introduced by using a Web page into key codes that a specific mobile telephone uses to modify the behavior of its functionalities. With the method described in this document, the connection or disconnection of a mobile telephone's vibrator for example would be possible by means of the intermediate artifact and by using a cable to transmit data to the mobile telephone.

French patent application FR-2866456 provides a programming agent in the mobile device which executes multimedia applications based on the data received from a server. It relates only to the reproduction of data sent from a server to a mobile device.

However, none of the previous background documents allows the combination of data, events and functionalities of a mobile device such that user-customized applications can be created; i.e. the aforementioned problem relating to mobile device capabilities modeling and the translation process between the different levels of rule description triggered by events and created by the user, ranging from the graphic model of the rule to the process that implements the rule in native code, including the storage of said rules as XML-based metadata, without needing to be an expert programmer, is not solved.

### Description of the Invention

The invention relates to a system for programming a mobile device. Mobile device programming is understood as the management, combination or automation of typical applications or services of a mobile device, as well as the set of events that it can receive or emit, creating a set of locally or remotely programmable user-customized processes.

An object of the present invention is to provide the user of the mobile device with an environment that is completely friendly, intuitive and sufficiently unrelated to the programming world which, however, allows the user to automate the behavior of his or her mobile device by describing the task flow defined by the user in a clear, specific and complete manner.

The invention relates to an event-driven system for programming a mobile device according to claim 1. Preferred embodiments of the system are defined in the dependent claims.

Today, a mobile device allows the use and modification of multiple functionalities and data by the user.

The available functionalities include:
- Typical applications of the operating system of the mobile device such as alarms, calendars, voice recorders or video cameras.
- Typical applications of the operating system that manage typical events of a mobile telecommunications system such as a message editor, call interface, notification manager, etc.
- Typical applications of the operating system or of another external application that manage data stored in the mobile device such as a photo and/or video camera manager, sound recording manager, image editor, etc.
- Typical applications of the operating system or of another external application that manage data provided by external repositories or services and that are accessed by means of some type of data connection, different to the mobile network connections such as Web navigators, applications that are connected to IP services, etc.

The available data for the system include:
- Events generated by the operating system. They can be produced by elements of the mobile device such as low battery, full memory warnings; or by the network in which it is operating: incoming calls, text messages, multimedia messages, etc.
- Data stored in the mobile device.
- Data from services external to the mobile device.

By means of the present invention all this information and functionality can be managed, combined and automated to produce applications specific to each user.

A first aspect of the present invention relates to an event-driven system for mobile device programming comprising:
- a rule creator module, collecting indications from a user of said mobile device and generates at least one rule translating said indications into programming metadata;
- a rule repository, storing said at least one rule formed by said programming metadata;
- a programmable information module, providing the rule creator module with the metadata establishing the programmable entities relating to the mobile device;
- a rule execution administrator module, controlling the activation and deactivation of said at least one rule extracted from the rule repository and passes said metadata of the rule as an execution parameter to a rule interpreter, which is sent to a rule execution engine module to execute or to detain and/or eliminate it; and
- said rule execution engine module, providing an execution environment in which the rule interpreter can run or be executed, converting said metadata into a process forming the rule.

According to the system of the invention, to convert said metadata into a process forming the rule, said rule interpreter preferably:
- analyzes said metadata and extracts at least one event to capture, and analyzes which tasks or task flow to execute when the arrival of said event is detected; and,
- executes a series of code lines to provide said process in which it runs with tools to listen to the operative system of the mobile device while waiting for said event and execute said tasks.

In other words, said rule interpreter is capable of analyzing said metadata, extracts the essential information to generate the rule (the event to capture and the tasks or task flow to execute when the arrival of the event is detected) and after that executes the necessary code lines to provide the process in which it runs with tools to listen to the operating system of the mobile device while waiting for the event and execute the defined tasks.

Said metadata establishing the programmable entities relating to the mobile device can include events that can be captured, actions that can be invoked and/or properties that can be checked for said mobile device... The same invention can therefore be used to program, using sets of events, actions or different properties, by simply using one metadata or another. There are many ways of implementing said programmable information module, ranging from a metadata file system to a database.

There can be many ways of collecting the indications from the user; the present invention does not specify a single way to do it. However some possibilities are: the use of an intelligent software agent that monitors the use that the user makes of the mobile device and infers rules and patterns; a graphic local or Web interface through which the user can specify his or her requirements in this regard; or any type of application based on the interaction with natural languages which allows the user to specify the behavior rules for the mobile device.

There are also many ways of implementing said rule repository, ranging from a metadata file system to a data base.

The programming system of the invention can be carried out external to the mobile device by means of applications such as a Web application; or internal applications modifying the user's programming data can also be used.

### Brief Description of the Drawings

A series of drawings is very briefly described below to help better understand the invention and are specifically related to a possible embodiment of said invention that is presented as an illustrative and non-limiting example thereof.
Figure 1 shows a diagram of the basic elements of the system of the invention.
Figure 2 shows the architecture of the Web-based part of the network of a possible exemplary implementation of the invention.
Figure 3 shows the architecture of the client part of a possible exemplary implementation of the invention.
Figure 4 shows a representative flowchart of a possible exemplary rule.
Figure 5 shows a preferred form of interaction between the rule execution administrator and the rule execution engine.

### Description of a Preferred Embodiment of the Invention

As previously indicated, mobile device 100 programming is understood as the management, combination or automation of typical applications or services of a mobile device - such as alarms, images, phonebook -, as the set of events that it can receive or emit - messages, calls or sounds for example -, creating a set of locally or remotely programmable user-customized processes.

The architecture of a possible implementation of the system of the invention is explained below.

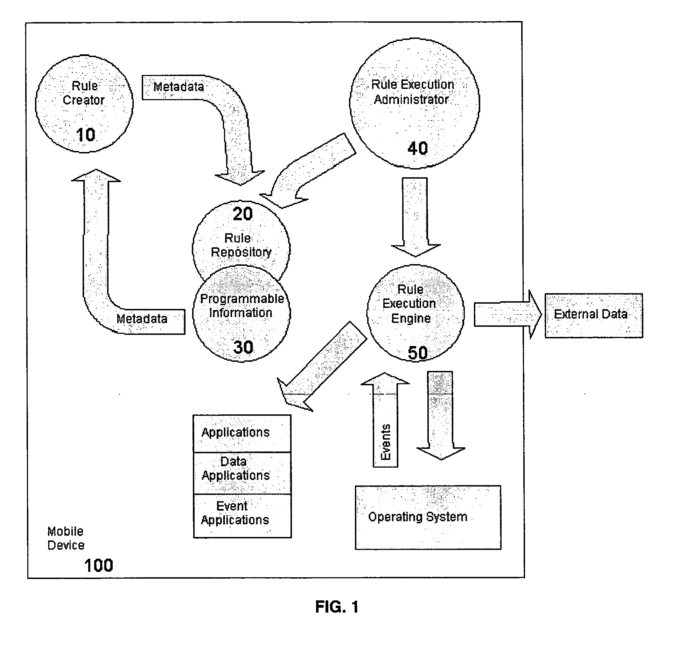

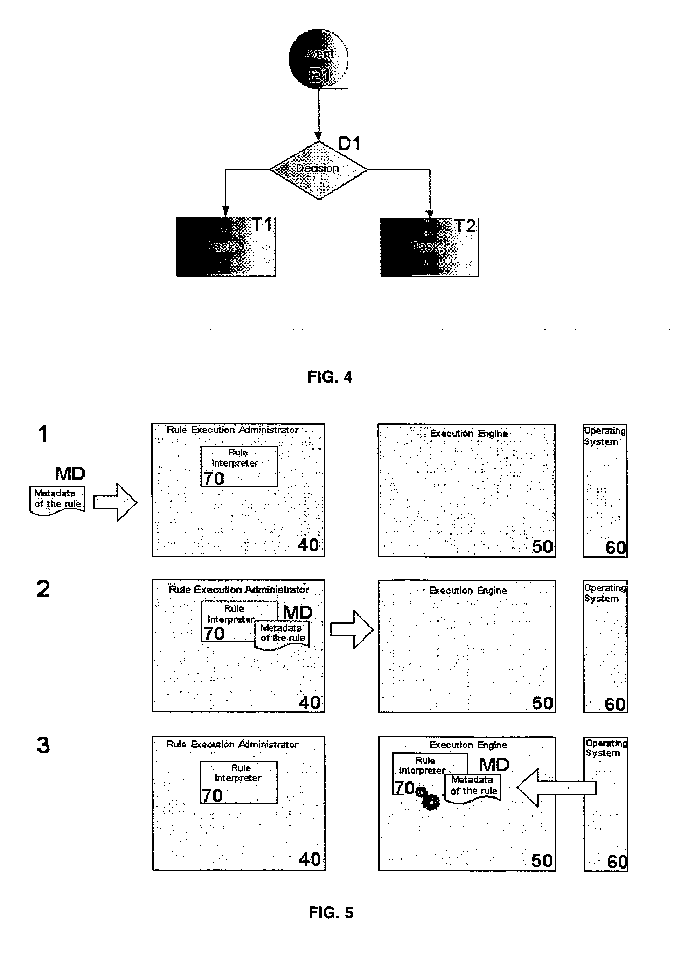

First of all, Figure 1 shows a diagram of the basic elements of the system of the invention, being:
- A rule creator module 10: collects user indications and translates them into programming metadata, thus generating a rule which is store in rule repository 20. A possible way of collecting user indications is the use of an intelligent software agent that monitors the use that the user makes of the mobile device and infers rules and patterns; a graphic local or Web interface through which the user can specify his or her requirements in this regard; or any type of application based on the interaction with natural languages which allows the user to specify the behavior rules for the mobile device. One way or another, the rule that is defined can be abstractly represented by means of a flowchart similar to that shown in Figure 4, in which it can be seen how there is an event E1 triggering the execution of a set of tasks T1, T2, the flow of which can be controlled by means of decision-makers D1.

Therefore, the metadata form a representation of the diagram shown in Figure 4 which is easily storable and consultable. Generically:

```
   <rule>
       <event name="incoming message" />
       <decision condition="sender = +34610513898">
            <case value = "true">
                  <task name="send message">
                      <parameter name="receiver">+34610513898</parameter>
                      <parameter name="text">Hello Guillermo</parameter>
                  </task>
            </case>
            <case value = "false">
                  <task name="delete message">
                  </task>
            </case>
       </decision>
   </rule>
```

- A rule repository module 20: stores programming metadata specifying the rules defined by the user.
- A programmable information module 30: provides the rule creator module with the metadata establishing the programmable entities relating to the mobile device, i.e. the events that can be captured, the actions that can be invoked, the properties that can be checked...
- A rule execution administrator 40: controls the activation and deactivation of the rules extracted from the rule repository, making use of the rule execution engine 50. As shown in greater detail in Figure 5, this module associates the metadata with executable files (rule interpreters) which are passed to the engine for execution thereof, creating the process which forms the rule.

Therefore, this module manages the rule interpreters 70, small programs to which the metadata MD of the rule are passed as an execution parameter. The module sends them to the rule execution engine 50 for execution thereof or asks the engine to stop and eliminate them. A rule interpreter is capable of analyzing said metadata and extracting the essential information to generate the rule (the event to capture and the tasks or task flow to execute when the arrival of the event is detected) and after that executes the necessary code lines in order to provide the process in which it runs with the tools to listen to the operating system of the mobile device while waiting for the event and execute the defined tasks. In other words, upon execution, a rule interpreter analyzes the metadata of the rule so as to become the process forming the rule.

For this generic case explained above, the process associated to the rule interpreter 70 + the metadata MD of the rule in question could be summarized in the following pseudo-code:

```
   function ManejadorEventoMensajeEntrante()
   {
              if (MensajeEntrante.Remitente == "+34610513898")
                     Dispositivo.Outbox.MandarMensaje("+34610513898", "Hola Guillermo");
              else
                     Dispositivo.Inbox.BorrarMensaje();
   }
   Dispositivo.Inbox.OnMensajeEntrante("ManejadorEventoMensajeEntrante");
```

The execution of the previous code first defines a function containing each and every one of the tasks of the rule, after doing this (in the last line of code) the rule interpreter subscribes to the notification of a certain event (in this case the incoming message) and registers the previously defined function as the handler of said event, such that it will be executed each time the associated event is captured.
- The execution rule engine 50: this is the module in charge of providing an execution environment in which the rule interpreters can run. Therefore this engine is responsible for capturing the events triggering the rules, as well as providing the necessary software artifacts so that the executable version of the rules (whatever nature it might be: script, native language...) has means to access the properties or invoke the actions available in the mobile device; this can include invoking services of the operating system, but also external applications or services.

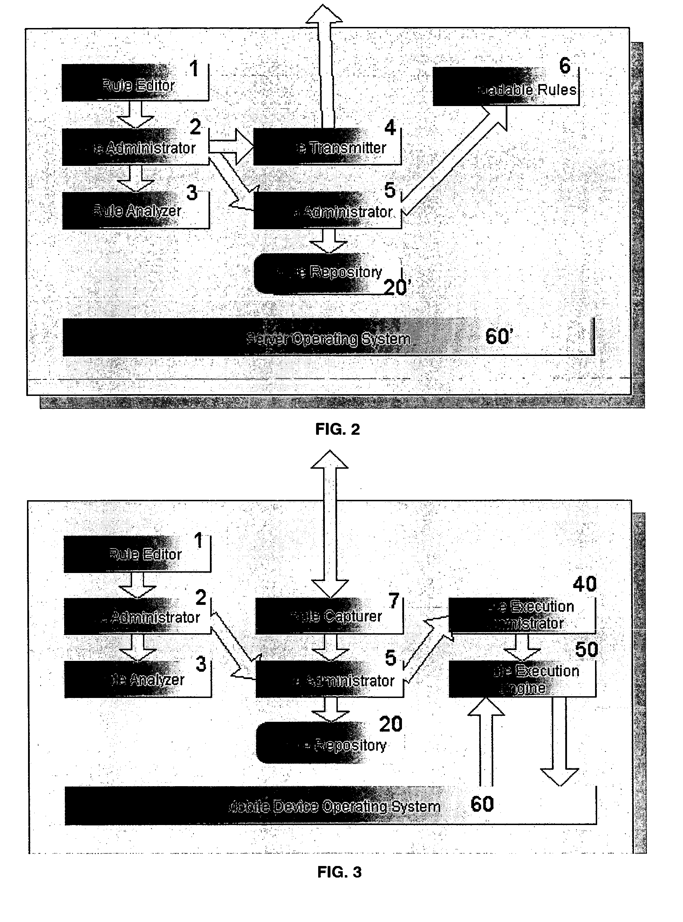

Figure 2 shows the Web application that allows a rule to be created and to be downloaded in a mobile device. Figure 3 shows the system implemented in the mobile device to collect any rule sent from the Internet, to create a rule directly from a mobile device or to register a rule so that it is executed each time that the event which triggers it is detected.

Specifically relating to Figure 2 (server), the modules that the system incorporates are the following:
- Rule editor 1: a graphic Web application that allows the user to create and edit rules by drawing flowcharts. Said flowcharts can be created from nothing or by using predefined templates. The rule editor communicates with rule administrator 2 since the latter provides all necessary business logic to create, edit, store or send rules. This user interface is programmed with Flash.
- Rule administrator 2: a module which is in charge of the necessary business logic to create, store, read and send said rules. It communicates with rule analyzer 3 to analyze the content of the rules, with data administrator 5 to access the place in which the XML-based templates and rules are stored, and with rule transmitter 4 to initiate the process of sending one of these rules to a mobile device.
- Rule analyzer 3: a module that analyzes the content of the rules. It is necessary in order to give an intuitive graphic interpretation to a complex XML file such as the one defining the rules or templates. The rule analyzer is a module that provides tools to easily dissect XML-based files, whether they are outlines defining the set of events or actions available in the mobile device or BPEL-based files defining a predefined service, rule or template previously extracted from the rule repository.
- Data administrator 5: a module that works with rule repository 20 and templates. It is necessary in order to carry out rule or template storage, search or deletion tasks. It is a module that manages the XML (BPEL) files defining both rules and templates or predefined services. Thus it is able to create XML files, open them for editing or delete them.
- Rule repository 20': a file system in charge of storing each and every one of the XML files defining rules and templates.
- Downloadable rules 6: in this implementation, rule downloading in a mobile device initiated from the server is carried out as explained below. Rule administrator 2 initiates the process by asking rule transmitter 4 to sent the user a message (SMS) containing the URL in which the rule will be shown. The user application (specifically rule capturer 7, which is described in detail below) captures said message and extracts the URL in order to download the rule. The downloadable rule web module 6 shows all downloadable XML files. In this way, rule capturer 7 connects to the downloadable rule and downloads it.
- Rule transmitter 4: a module in charge of sending the message to the application in the mobile device so that the latter connects to downloadable rules in order to download the XML file, i.e. the rule. It sends an SMS with an identifying label in the body of the message which allows the rule capturer to differentiate it from the rest of the incoming messages in the mobile device and to extract the URL to which it must connect in order to download the new rule.
- Server operating system 60': the server operating system that supports the whole system
   Relating to Figure 3 (client), the modules that the system incorporates are the following:
- Rule editor 1: a graphic application that allows the user to create and edit rules by drawing flowcharts. Said flowcharts can be created from nothing or by using predefined templates. The rule editor communicates with rule administrator 2 since it provides all necessary business logic to create, edit, store or send rules. This user interface is programmed with Flash.
- Rule administrator 2: a module which is in charge of the necessary business logic to create, store, read and activate said rules. It communicates with rule analyzer 3 to analyze the content of the rules and with data administrator 5 to access the place in which the XML-based rules and the templates are stored, in addition to activating or deactivating them in the mobile device.
- Rule analyzer 3: a module that analyzes the content of the rules. It is necessary in order to give an intuitive graphic interpretation to a complex XML file such as the one defining the rules and templates. The rule analyzer is a module that provides tools to easily dissect XML-based files, whether they are outlines defining the set of events or actions available in the mobile device or BPEL-based files defining a predefined service, rule or template previously extracted from the rule repository.
- Data administrator 5: a module that works with template and rule repository 20. It is necessary in order to carry out rule or template storage, search or deletion tasks. It is a module that manages the XML (BPEL) files defining both rules and templates or predefined services. Thus it will be able to create XML files, open them for editing or delete them.
- Rule repository 20: a file system in charge of storing each and every one of the XML files defining rules and templates. It additionally stores the XML outlines defining the modeling of the mobile device in the script language that is used to implement the rule execution part of the system, i.e. the XML outlines defining the properties, events and actions of each and every one of the objects that make up the mobile device from the optics of the script language used.
- Rule capturer 7: a module in charge of identifying incoming messages as coming from the system server to initiate, where applicable, the download of a rule that has been created in the server. To do this, it analyzes the body of the incoming message in search of the label identifying it as a web created message of a rule. After identifying it as such, the rule capturer extracts the URL in which the rule (an XML file) is shown and downloads it via the web.
- Rule execution administrator 40: a module in charge of controlling and managing the active rules in the mobile device. The rule administrator communicates with the rule execution administrator to launch rule activation or deactivation. The rule execution administrator analyzes the rules and by means of a scripting system initiates its execution in the engine (rule execution engine 50). In this implementation of the invention, the rule execution administrator has a script (the rule interpreter) to which the XML (BPEL-based) file defining the rule is passed as an input parameter. The rule execution administrator sends the script together with its input parameter to the rule execution engine for execution. The execution of said script includes the line by line analysis of the XML file describing the rule and the execution of associated script commands which form the process defining the rule.
- Rule execution engine 50: this module forms the engine in which the rules that have already been transformed into scripts capable of capturing telco events of the operating system, such as making calls, sending SMS, MMS messages and many other functionalities, are executed.

The rule execution engine captures the telco events of the mobile device and executes the routines that the rules have defined for each of the events. This rule execution engine is able to interpret the script that the rule execution administrator passes it, since it incorporates the object model defining the mobile device which has been used to define events, properties and actions relating to the mobile device.
- Mobile device operating system 60: operating system of the mobile device supporting the whole system. It generates events that the rule execution engine consumes and in turn provides API's to access low level functionalities.

A possible exemplary implementation of the invention would be to program the mobile device, combining the event produced by the mobile telephone alarm with the sending of an SMS, or the reception of an SMS with the consultation of an external service and programming an appointment in the diary or calendar according to the result of the service.

More specifically, one example of using the invention is the following: a user decides to take a trip with several friends; however the weather is changeable and the departure is not confirmed. They agree that they will decide whether or not to continue with the activity depending on when they get up and once the weather is known. One of the friends is able to make use of the invention and program an easy process that carries out the confirmation and notification task. For example, by means of a local graphical application a process can be established with several activities making the task easier:
- first of all the mobile device alarm is programmed so that at the hour chosen, the weather in the place chosen for the trip is consulted at a meteorological service offered on the network, for example, by means of web services;
- according to the results sent back and to those provided by the user in the programming, for example, to consider sunny weather as the only positive answer in order to make the trip, a message is sent to the contacts that are going to participate in the activity and the device alarm goes off to wake up the user. In the event that the weather was unfavorable, the alarm is deactivated and the user is not woken up.

## Claims

1. An event-driven system for programming a mobile device (100), comprising:
- a rule creator module (10), collecting indications from a user of said mobile device and generates at least one rule translating said indications into programming metadata;
- a rule repository (20), storing said at least one rule formed by said programming metadata;
- a programmable information module (30), providing the rule creator module with the metadata establishing the programmable entities relating to the mobile device;
- a rule execution administrator module (40), controlling the activation and deactivation of said at least one rule extracted from the rule repository and passes said metadata of the rule as an execution parameter to a rule interpreter, which is sent to a rule execution engine module to execute or to detain and/or eliminate it; and
- said rule execution engine module (50), providing an execution environment in which the rule interpreter can be executed, converting said metadata into a process forming the rule.

2. A system according to claim 1, **characterized in that** to convert said metadata into a process forming the rule, said rule interpreter:
- analyzes said metadata and extracts at least one event to capture, and analyzes which tasks or task flow to execute when the arrival of said event is detected; and
- executes a series of code lines to provide said process in which it runs with tools to listen to the operating system of the mobile device while waiting for said event and execute said tasks.

3. A system according to any of the previous claims, **characterized in that** said metadata establishing the programmable entities relating to the mobile device include events that can be captured, actions that can be invoked and/or properties that can be checked for said mobile device.

4. A system according to any of the previous claims, **characterized in that** said indications from the user of the mobile device are collected by means of an intelligent software agent that monitors the use of the mobile device made by the user and infers rules and patterns.

5. A system according to any of claims 1-3, **characterized in that** said indications from the user of the mobile device are collected by means of a graphic Web interface through which the user can specify such indications.

6. A system according to any of the claims 1-3, **characterized in that** said indications from the user of the mobile device are collected by means of a local graphic interface through which the user can specify such indications.
